# FASCICULE DE BREVET EUROPEEN

(11) **EP 0 927 658 B1**
(45) Date de publication et mention de la délivrance du brevet: **27.03.2002**
(21) Numéro de dépôt: 98403350.6
(22) Date de dépôt: 31.12.1998
(51) Int. Cl.: B60M 1/28, H02G 1/04

(54) **Système de déroulage et de pose de fils tels que notamment de câbles d'alimentation caténaires**
Abwickel- und Verlegeinrichtung für Leitungen, zum beispiel Stromoberleitungen
Unwind and stringing system for lines, e.g. catenary lines

(30) Priorité: 05.01.1998 FR 9800023
(43) Date de publication de la demande: 07.07.1999
(73) Titulaire: SOCIETE DES ANCIENS ETABLISSEMENTS L. GEISMAR, F-92200 Neuilly sur Seine (FR)
(72) Inventeur: Glemet, Frédéric, 92600 Asnières (FR)
(74) Mandataire: Berger, Helmut

(56) Documents cités:
- EP-A- 0 713 799
- US-A- 4 421 301
- US-A- 4 531 714

## Description

L'invention concerne un système de déroulage et de pose de fils tel que notamment de câbles d'alimentation caténaires supportés par une structure de support fixe, lors de la construction et le renouvellement d'installations caténaires, du type comprenant un dispositif porteur de bobines de fils desquelles sont déroulées les fils à poser, et de moyens de déroulage et de pose de fils sur la structure de support, cette dernière étant susceptible de comporter des obstacles s'opposant au déroulage et à la pose, tels que des poutres de portiques rigides, des traversées de plans caténaires, des équipements croisés et de communication ou analogue.

Les systèmes de ce type, qui sont connus, comportent un système porteur de bobines de fil ou câbles qui se déplace d'un point d'ancrage des câbles au point d'ancrage suivant, en amont d'un obstacle, et puis d'un point d'ancrage en aval de celui-ci au point d'ancrage alors suivant.

Les systèmes connus ont pour inconvénient majeur de ne pas permettre un déroulage et une pose en continu des fils en cas d'obstacle.

La présente invention a pour but de proposer un système qui pallie les inconvénients qui viennent d'être énoncés.

Pour atteindre ces buts, le système selon l'invention est caractérisé en ce que le dispositif porteur des bobines est une unité susceptible d'être immobilisée pendant le déroulage et la pose, le dispositif de déroulage et de pose est monté sur un véhicule déplaçable le long du trajet de déroulage et comportant une unité tire-fil à deux dispositifs de pince de saisie d'un fil, montés sur un support à une distance prédéterminée l'un de l'autre dans la direction axiale du fil, chaque dispositif étant sélectivement déplaçable entre une position haute de saisie du fil et une position basse d'effacement devant un obstacle dans laquelle le fil n'est pas maintenu.

La figure 1 est une vue latérale, schématique d'un système selon la présente invention.

La figure 2 est une vue schématique, en élévation d'un véhicule portant un agencement de déroulage et de pose de câbles caténaires, selon la présente invention, l'agencement occupant sa position de travail déployée.

La figure 3 est une vue similaire à la figure 2, mais montre l'agencement de déroulage et de pose dans une position repliée.

La figure 4 est une vue en direction de la flèche IV de la figure 2 dans le cas d'une voie en devers.

La figure 5 est une vue schématique illustrant le processus de franchissement d'un obstacle.

Les figures 6 à 8 sont des vues respectivement latérales, axiales et de dessus d'un premier mode de réalisation d'un dispositif de pince de saisie de câbles.

Les figures 9 et 10 sont deux vues schématiques latérales de deux autres modes de réalisation d'un dispositif de pince de saisie de câbles selon la présente invention.

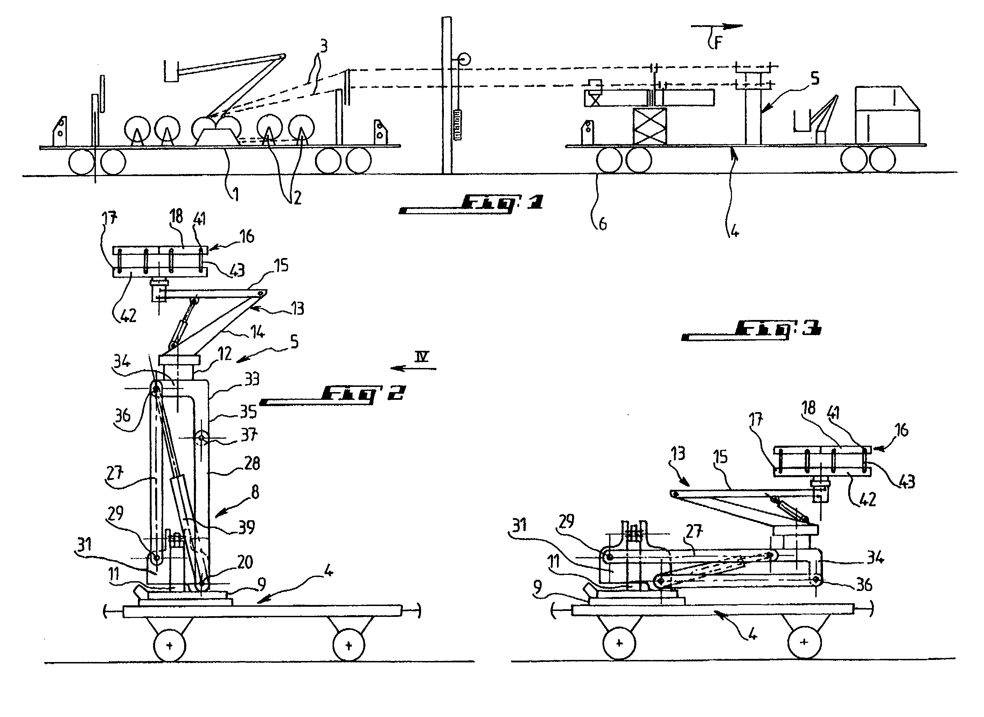

La figure 1 illustre, à titre d'exemple, un système selon l'invention, conçu pour le déroulage et la pose des fils et câbles d'alimentation d'une installation caténaire d'une voie de chemin de fer. Ce système comporte essentiellement un premier véhicule 1 qui porte un certain nombre de bobines de câbles 2 desquelles les câbles indiqués en 3 peuvent être déroulés et un second véhicule 4 qui comporte un agencement de déroulage et de pose 5 des fils 3. Les deux véhicules 1 et 4 sont déplaçables sur la voie ferrée indiquée en 6. Lors du processus de déroulage et de pose, le véhicule 1 est immobilisé tandis que le véhicule 4 se déplace dans la direction de la flèche F. Le déroulage se fait sous tension mécanique afin d'obtenir la qualité de pose nécessaire au bon captage du courant par les machines électriques des trains devant circuler sur la voie indiquée en 6. Les véhicules 1 et 4 comportent encore d'autres équipements mais du fait que ceux-ci ne concernent pas l'invention, ils ne sont pas décrits.

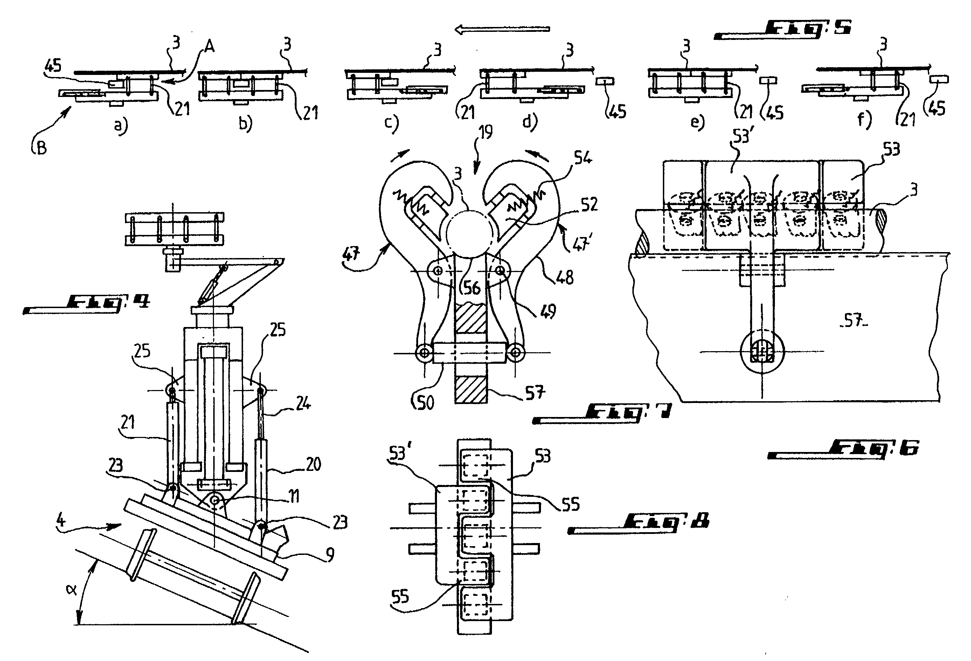

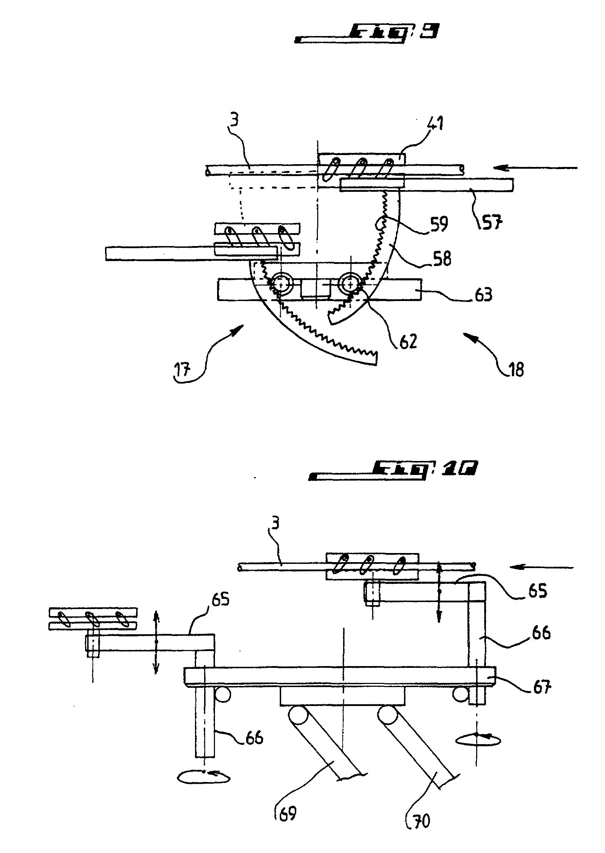

En se référant aux figures 2 et 3, on décrira ci-après un mode de réalisation avantageux de l'agencement de déroulage et de pose 5 selon l'invention, le véhicule 4 qui porte cet équipement n'étant représenté, à la différence de la figure 1, que sous forme d'un véhicule non motorisé.

L'agencement 5 comporte essentiellement un mât 8 qui est monté sur le véhicule rotatif autour d'un axe vertical, à l'aide d'une embase 9 pivotante autour d'un axe horizontal 11, et porte une tourelle intermédiaire 12 de support d'un ensemble 13 formé dans l'exemple représenté par deux bras articulés 14 et 15 et pourvu de moyens de variation de l'angle formé par les bras et dont l'extrémité porte une tête tire-fil 16 à deux dispositifs de pince de saisie et de maintien de câble, à savoir avant 17 et arrière 18, décalés d'une distance prédéterminée l'un de l'autre, dans la direction du déroulement du câble, comme on le voit plus clairement sur la figure 5. Les dispositifs 17 et 17' sont portés par un support monté rotatif autour d'un axe vertical et pivotant dans un plan vertical sur l'extrémité du bras terminal 15.

Le mât 8 dans le cas d'une voie en dévers pivote dans son ensemble autour de l'axe de pivotement 11, situé au niveau de l'embase 9, à l'aide de deux vérins latéraux 20, 21 disposés de part et d'autre de l'axe 11 et articulés dans l'exemple représenté par le corps du vérin en 23 à l'embase tournante 9 et par l'extrémité de la tige de piston 24 à des consoles latérales 25 solidaires du mât. Les vérins 20, 21 servent de vérins de correction du dévers de la voie, assurant toujours une position verticale du mât, indépendamment de l'angle d'inclinaison transversal α de la voie (figure 4).

Le mât 8 lui-même est réalisé sous forme d'un parallélogramme déformable dont les côtés longs sont formés par deux montants 27 et 28, chacun en forme d'un portique (figure 4). Les deux montants 27, 28 sont articulés respectivement en 29 et 20 à la base 31 du mât, à des hauteurs différentes, et en haut à un élément coudé 33 qui comporte une partie horizontale 34 portant la tourelle d'orientation 12 et une partie verticale 35, de façon à pouvoir être articulée respectivement au montant 27 et au montant 28, en 36 et 37 à des hauteurs différentes correspondant au décalage vertical des articulations 29 et 20 à la base du parallélogramme. Ce dernier est déformable à l'aide d'un vérin 39 dont les extrémités sont articulées à l'extrémité supérieure du montant 27 et à l'extrémité inférieure de l'autre montant 28.

Le mât 8 est dimensionné pour supporter une charge perpendiculaire égale au total de la tension appliquée à chaque câble, à une hauteur pouvant varier de 3 à 9 mètres au-dessus du niveau du plancher du véhicule 3.

Les deux dispositifs de saisie 17, 18 de l'unité tire-câble 16 comprennent chacun une pince de saisie de câbles 41 qui est déplaçable entre une position haute de saisie de câble A et une position basse d'effacement B, dans laquelle la pince peut passer en-dessous ou devant un obstacle alors que le câble doit être amené au-dessus ou par derrière de celui-ci, comme il sera décrit plus en détails ci-après, en se référant à la figure 5. A cette fin, dans le mode de réalisation des dispositifs de saisie représentés sur les figures 2 à 5, les deux pinces sont montées sur un support commun 42, chacun par l'intermédiaire de deux biellettes parallèles 43 qui sont susceptibles de pivoter entre une position verticale de saisie de câbles et une position horizontale d'effacement. On obtient ainsi un support de pince en forme d'un parallélogramme.

La figure 5 illustre le processus de franchissement d'un obstacle indiqué en 45, tel qu'un portique s'étendant, à une certaine hauteur, au-dessus de la voie perpendiculairement à celle-ci. A l'approche de l'obstacle 45, la pince 17 avant se trouve dans sa position d'effacement B, avec les deux biellettes 21 dans leur position sensiblement horizontale. Le câble 3 est uniquement saisi et tiré par la pince arrière dont les biellettes s'étendent verticalement. On constate que la tête tire-câble est placée verticalement à une hauteur telle que l'obstacle 45 se trouve verticalement entre les pinces avant et arrière. Lors du déplacement du véhicule de déroulage, dans la direction de la flèche, la pince avant peut passer en-dessous de l'obstacle tandis que la pince arrière supérieure peut faire passer le câble au-dessus de l'obstacle, comme on le voit sur la figure 5a. Puis la pince avant est amenée à pivoter dans sa position élevée A de saisie de câble, comme on le voit sur la figure 5b, et c'est la mâchoire arrière qui lâche le câble et s'efface, conformément à la figure 5c. Ce n'est qu'après que la tête de saisie ait atteint la position indiquée sur la figure 5d dans laquelle l'obstacle se trouve derrière la pince arrière effacée que ce dernier est amené à revenir dans sa position élevée A, conformément à la figure 5e. Le câble 3 étant à nouveau tiré par la pince arrière, la pince avant s'efface à nouveau à l'approche d'un obstacle suivant, comme on le voit sur la figure 5f. Les pinces avant 17 et arrière 18 sont donc montées sur le support de façon sélectivement déplaçable entre une position A de franchissement par le fil d'un obstacle, avec le fil 3 maintenu saisi, et une position B de franchissement de l'obstacle, sans fil.

En se référant maintenant aux figures 6 à 10 on décrira trois modes de réalisation des pinces de saisie de câble.

Dans le mode selon les figures 6 à 8, la pince 41 comprend deux mâchoires 47, 47' dont chacune comporte un levier à deux bras 48 monté pivotant sur une console 49 solidaire d'une face latérale d'un support monté verticalement mobile sur le support de la tête de tire-fil. Les deux leviers pivotent, dans des sens de pivotement opposés, comme cela est indiqué par des flèches, sous l'effet d'un vérin commun 50, interposé entre les deux extrémités inférieures des leviers et traversant le support. L'extrémité opposée de chaque levier est configurée comme support d'une pluralité de mors de serrage de câble 52 à surface d'attaque striée. Comme on le voit notamment sur la figure 8, les extrémités des leviers présentent la forme de peignes 53, 53', chaque dent présentant un profil en U ouvert en direction du câble 3, avec un mors 52 supportée entre les deux branches du U, déplaçable en direction du câble sous l'effet d'un ressort 54. Il ressort de la figure 8, que l'extrémité en peigne 53 du levier 48 comporte trois dents 55 et donc trois mors de serrage 52 et l'extrémité en peigne 53' de l'autre levier comprend deux dents 55. Concernant le câble 3, il repose sur la face supérieure 56 du support 57, qui présente un profil concave approprié adaptée au profil du câble. Les leviers 48 de support des mors de serrage 52 sont montés sur le support 57, pivotant entre une position écartée d'ouverture de la pince, permettant le passage du câble entre les extrémités de support des mors (figure 7) et une position fermée dans laquelle les peignes s'imbriquent l'un dans l'autre et les mors 52 viennent en appui sur le câble, sous l'effet des ressorts 54 (figure 8). Ainsi la câble se trouve enserré entre les mors 52 et la surface supérieure concave 56 du support. Pour améliorer l'effet de serrage, les mors 52 ne sont pas orientées perpendiculairement à la face périphérique du câble mais inclinées par rapport à celui-ci, comme on le voit sur la figure 6.

Concernant le fonctionnement de la tête tire-câble équipée de dispositifs de saisie selon les figures 6 à 8, pour amener un dispositif dans sa position d'effacement B (figure 5), il convient de commander l'ouverture de la pince par écartement des leviers de support 48, à l'aide du vérin de commande 50 et d'abaisser ensuite le support de chaque pince avant ou arrière, sélectivement, pour libérer le câble 3. Pour saisir à nouveau le câble, il suffit d'imposer à la pince le mouvement inverse et ensuite commander la fermeture de la pince.

Le mode de réalisation de la tête tire-câble montré sur la figure 9 présente la particularité, que chaque pince 41 est montée horizontalement déplaçable en direction de la flèche sur un support 57 lui-même déplaçable en translation à l'aide d'un segment arqué 58 faisant saillie de sa face inférieure et qui est configuré en crémaillère en 59 engrenant un pignon 62 monté rotatif sur un support 63 qui est commun aux deux dispositifs de saisie 17, 18. Sur la figure 9, les pinces ne sont représentées que schématiquement. Elles peuvent être réalisées sous toutes formes appropriées, par exemple conformément aux figures 6 à 9.

Dans le mode de réalisation selon la figure 10, le support des pinces des dispositifs 17, 18 présente chacun la forme d'un L dont la branche horizontale 65 porte à son extrémité la pince alors que la branche verticale 66 est supportée verticalement mobile et rotative autour de son axe sur un support 67 commun aux deux dispositifs. Les différentes possibilités de mouvement sont indiquées à nouveau par des flèches. La figure montre les deux dispositifs dans leur position respectivement de saisie du câble et de l'effacement en vue du franchissement d'un obstacle.

Il est à noter que les vérins d'actionnement 50 des pinces et les déplacements des supports de pince peuvent être commandés à distance ou automatiquement par un dispositif détecteur d'obstacles approprié, monté sur la tête tire-fil.

Cette figure 10 montre également que le bras de support de la tête de tire-câble, au lieu d'être formée, conformément aux figures 2 à 4, par un bras articulé, pourrait être réalisée sous forme d'un parallélogramme déformable dont les deux bras longitudinaux parallèles sont indiqués en 69 et 70.

Grâce à sa structure qui vient d'être décrite, l'invention permet le déroulage et la pose des câbles en franchissant des obstacles horizontaux, situés à une certaine hauteur comme on le voit sur la figure 5. L'invention permet également la pose de câbles même si les obstacles sont formés par exemple par des poteaux verticaux où il s'agit, par rapport à la voie, de passer derrière ces poteaux. Il suffit alors de positionner la tête tire-câble latéralement par rapport à la voie, et de placer ensuite le support des dispositifs de saisie verticalement, au moyen du mécanisme d'orientation articulé de façon pivotante à l'extrémité du bras terminal à l'aide d'un vérin d'orientation non représenté.

En équipant la base du mât en forme d'un parallélogramme, d'une couronne d'orientation permettant un angle de rotation de deux fois 120°, il est possible de positionner le parallélogramme de part ou d'autre du véhicule, perpendiculairement à la voie, pour travailler non seulement sur les poteaux de la voie où se déplace le véhicule mais aussi sur ceux de la voie adjacente. La reprise de l'effort de traction de 2000 DaN sous cet équipement positionné à 90° implique un renforcement conséquent du parallélogramme de base et de tous les éléments. La polyvalence du système de déroulage et de pose de câbles selon l'invention est obtenue grâce à certaines caractéristiques structurelles qui ont été décrites ci-dessus mais sont répétées brièvement. Concernant le mât, on constate que sa partie basse de grande rigidité est reprise sur une table fixée sur le plancher du véhicule. Cette table comporte deux secteurs en demi-cercle dans lesquels la base du parallélogramme peut être amenée à pivoter. Cet artifice permet de garder la partie supérieure parfaitement centrée par rapport à une voie en dévers. Ceci assure aussi un positionnement de l'axe de tirage du câble. L'effort de traction se situe toujours dans l'axe du parallélogramme. Les efforts dus au couple hauteur-tension du câble restent toujours centrés. La tourelle située en bout du parallélogramme de base constitue une parfaite assise d'orientation de la partie supérieure comportant elle aussi un parallélogramme ou un bras articulé. Le support des dispositifs de saisie pouvant être orienté grâce à un vérin, la tête tire-câble peut être positionnée pendant le tirage de façon que le vérin soit en mesure de reprendre l'effort de traction sous forme de poussée. La tête est montée sur une couronne d'orientation orientable parfaitement verticalement. Pendant la traction du câble, lorsque celui-ci est pris dans la pince arrière, cette orientation est laissée flottante. Lors des reprises en passage d'obstacles, l'orientation est par contre bloquée.

Pour éviter un problème de surlongueur du câble dû à la reprise de celui-ci à chaque obstacle, la pince peut pendant le serrage être soit reculée, soit avancée de la valeur de la prise de pince afin qu'à chaque obstacle on retrouve la position d'origine. Cette compensation peut être faite pendant l'avancement entre deux obstacles et sous tension en effectuant un mouvement très lent. Les supports de pince peuvent être équipés de cellules de détection en hauteur afin de passer au plus prés de l'obstacle en verticale. Une détection supplémentaire peut être réalisée afin de faire le passage sur un obstacle par effacement et positionnement successifs de pince sous forme de cycles complets afin de ne pas arrêter le déroulement ou l'avancement du véhicule de déroulage.

En résumé, le fait d'avoir le support de pince toujours en position horizontale parallèlement à la voie et de pouvoir reprendre sur une structure stable l'effort de traction sur le câble, l'ensemble peut indifféremment travailler dans un sens ou dans l'autre. La configuration mât-tourelle intermédiaire-bras supérieur, pourvue de moyens d'orientation permet d'atteindre de grandes hauteurs, d'obtenir un ensemble très stable et que les pinces ne soient pas soumises à la torsion. Le support des pinces étant toujours parfaitement horizontal, il est possible de passer au plus près des obstacles. La charge et la reprise du câble sur l'obstacle peut se faire en cycles automatiques, ce qui permet de faire en sorte que l'avancement du travail de pose de câble ne soit pas interrompu.

## Revendications

1. Système de déroulage et de pose de fils tels que notamment de câbles d'alimentation caténaires supportés par une structure de support fixe, du type comprenant un dispositif porteur de bobines de fils desquelles sont déroulés les fils à poser, et de moyens de déroulage et de pose de fils sur la structure de support, cette dernière étant susceptible de comporter des obstacles s'opposant au déroulage et à la pose, tels que des poutres de portiques rigides, traverses ou analogue, **caractérisé en ce que** le dispositif porteur de bobines est une unité (1) susceptible d'être immobilisée pendant le déroulage et la pose, les moyens de déroulage et de pose (5) sont montés sur un véhicule (4) déplaçable le long du trajet de pose et comportant une unité tire-fil (16) à deux dispositifs de pinces de saisie d'un fil (3), avant (17) et arrière (18), montés sur un support à une distance prédéterminée l'un de l'autre dans la direction axiale du fil, chaque dispositif étant sélectivement déplaçable entre une position (A) haute de saisie de fil (3) , et une position (B) basse d'effacement devant un obstacle dans laquelle le fil (3) n'est pas maintenu.

2. Système selon la revendication 1, **caractérisé en ce que** chaque pince (41) est déplaçable entre une position au-dessus ou derrière un obstacle (45), par rapport au véhicule (4) porteur des moyens de déroulage et de pose et une position en-dessous ou devant l'obstacle.

3. Système selon l'une des revendications 1 ou 2, **caractérisé en ce que** les moyens de déroulage et de pose de fils ou cables comportent un ensemble support de l'unité tire-fil (16), qui est monté sur le véhicule (4) rotatif autour d'un axe perpendiculaire au plancher du véhicule et pivotant autour d'un axe (11) dans un plan perpendiculaire à l'axe de rotation et dont la longueur est variable.

4. Système selon la revendication 3, **caractérisé en ce que** l'ensemble de support comporte un mât (8) monté rotatif autour de l'axe de rotation précité et pivotant autour de l'axe de pivotement (11) précité, qu'un bras porteur (13) de l'unité tire-fil (16) est monté sur l'extrémité supérieure du mât (8), par l'intermédiaire de moyens d'orientation (12) dans le plan horizontal et vertical, et que l'unité tire-fil (16) est montée sur le bras (13) par l'intermédiaire de moyens d'orientation, le cas échéant, dans le plan horizontal et vertical.

5. Système selon la revendication 4, **caractérisé en ce que** le bras précité (13) est monté sur le mât (8) au moyen d'une tourelle intermédiaire (12).

6. Système selon l'une des revendications 4 ou 5, **caractérisé en ce que** le mât (8) est réalisé sous forme d'un parallélogramme (27, 28) déformable par un moyen de commande tel qu'un vérin (39).

7. Système selon l'une des revendications 4 à 6, **caractérisé en ce que** le bras 13 est réalisé sous forme d'un bras articulé (14, 15) pourvu de moyens de variation de l'angle formé par les bras.

8. Système selon l'une des revendications 4 à 6, **caractérisé en ce que** le bras (13) est réalisé sous forme d'un parallélogramme (69, 70) déformable par un moyen de commande tel qu'un vérin.

9. Système selon l'une des revendications 3 à 8, **caractérisé en ce que** l'ensemble de support possède des moyens (20, 21) de correction d'inclinaison du véhicule (4) dû au dévers.

10. Système selon l'une des revendications 1 à 9, **caractérisé en ce qu'**une pince (41) comporte deux mâchoires (47, 47') montées pivotantes entre des positions de fermeture et d'ouverture de pince, sur un support (57) mobile entre les positions de franchissement A du fil ou cable et la position de franchissement B de la pince.

11. Système selon la revendication 10, **caractérisé en ce que** les deux mâchoires comportent des mors de serrage (52) sous forme de peignes, équipes de cames à ressort (53, 53') s'imbriquant mutuellement dans la position de fermeture de la pince.

12. Système selon l'une des revendications 1 à 11, **caractérisé en ce qu'**un support de pince est déplaçable par un mécanisme en forme de parallélogramme déformable.

13. Système selon l'une des revendications 1 à 11, **caractérisé en ce qu'**un support de pince comporte un élément en forme de crémaillère arquée (40, 41) déplaçable à l'aide d'un pignon (42) monté sur un support commun (42) des pinces de l'unité tire-fil.

14. Système selon l'une des revendications 1 à 13, **caractérisé en ce que** l'ensemble de supports (8, 13) de l'unité tire-fil (16) est déplaçable latéralement par rapport à une voie de chemin de fer sur laquelle se déplace le véhicule (4) dans une position de pose des fils au dessus de la voie adjacente.

15. Système selon l'une des revendications 1 à 14, **caractérisé en ce que** l'unité tire-fil (16) peut être placée dans une position horizontale de déroulage et de pose des fils derrière des obstacles verticaux.

## Patentansprüche

1. Abwicklungs- und Verlegungseinrichtung für Leitungen zum Beispiel Stromoberleitungen, die von einer festen Halterungsstruktur von der Art getragen wird, umfassend eine Haltevorrichtung für Kabelspulen, aus denen die zu verlegenden Kabel abgewickelt werden, und Abwickel- und Kabelverlegemittel auf der Haltestruktur, wobei letztere geeignet ist, Hindernisse zu umfassen, die sich dem Abwickeln und dem Verlegen widersetzen, wie zum Beispiel Träger von steifen Freileitungsjochs, Traversen oder dergleichen, **dadurch gekennzeichnet, daß** die Spulentragevorrichtung eine Einheit (1) ist, die geeignet ist, während des Abwickelns und des Verlegens angehalten zu werden, die Abwickel- und Verlegemittel (5) sind auf einem Fahrzug (4) aufgebaut, das entlang der Verlegebahn verschiebbar ist und umfassend eine Kabeleinzieheinheit (16) mit zwei Klemmvorrichtungen zum Ergreifen eines Kabels (3), eine vorne (17), und eine hinten (18), die auf einer Stütze in einer vorbestimmten Entfernung voneinander in der axialen Richtung des Kabels angebracht sind, wobei jede Vorrichtung selektiv zwischen einer hohen Greifposition (A) des Kabels (3) und einer niedrigen Greifposition (B) vor einem Hindernis verschiebbar ist, in der das Kabel (3) nicht festgehalten wird.

2. System gemäß Anspruch 1, **dadurch gekennzeichnet, daß** jede Klemme (41) zwischen einer Position oberhalb eines Hindernisses (45) oder dahinter im Verhältnis zum Fahrzeug (4), das die Abwickel- und Verlegemittel trägt, und einer Position unter oder vor dem Hindernis verschiebbar ist.

3. System gemäß Anspruch 1 oder 2, **dadurch gekennzeichnet, daß** die Abwickel- und Verlegemittel der Leitungen oder Kabel einen Halteaufbau der Kabeleinzieheinheit (16) umfassen, der auf dem Fahrzeug (4) rotierend um eine senkrechte Achse des Bodens des Fahrzeugs und schwenkend um eine Achse (11) in einer senkrechten Ebene zur Rotationsachse aufgebaut ist, und deren Länge variabel ist.

4. System gemäß Anspruch 3, **dadurch gekennzeichnet, daß** der Halteaufbau einen Mast (8) umfaßt, der rotierend um die vorgenannte Rotationsachse und schwenkend um die vorgenannte Schwenkachse (11) angebracht ist, daß ein Trägerarm (13) der Kabeleinzieheinheit (16) auf dem oberen Ende des Mastes (8) mittels Ausrichtungsmitteln (12) in der horizontalen und vertikalen Ebene angebracht ist und daß die Kabeleinzieheinheit (16) auf dem Arm (13) mittels Ausrichtungsmitteln angebracht ist, gegebenenfalls in der horizontalen und vertikalen Ebene.

5. System gemäß Anspruch 4, **dadurch gekennzeichnet, daß** der vorgenannte Arm (13) auf dem Mast (8) mittels eines Zwischenaufbaus (12) angebracht ist.

6. System gemäß Anspruch 4 oder 5, **dadurch gekennzeichnet, daß** der Mast (8) in Form eines Parallelogramms (27, 28) realisiert ist, das durch ein Steuermittel, wie zum Beispiel einem Zylinder (39), verformbar ist.

7. System gemäß Anspruch 4 bis 6, **dadurch gekennzeichnet, daß** der Arm 13 in Form eines artikulierten Arms (14, 15) realisiert ist, der mit Mitteln zur Veränderung des von den Armen gebildeten Winkels versehen ist.

8. System gemäß Anspruch 4 bis 6, **dadurch gekennzeichnet, daß** der Arm (13) in Form eines Parallelogramms (69, 70) realisiert ist, das durch ein Steuermittel, wie zum Beispiel einem Zylinder, verformbar ist.

9. System gemäß Anspruch 3 bis 8, **dadurch gekennzeichnet, daß** der Halterungsaufbau Mittel (20, 21) zur Korrektur der Neigung des Fahrzeugs (4) aufgrund einer Schräglage besitzt.

10. System gemäß Anspruch 1 bis 9, **dadurch gekennzeichnet, daß** eine der Klemmen (41) zwei Klemmbacken (47, 47') umfaßt, die schwenkend zwischen der geschlossenen und der geöffneten Position der Klemme auf einem mobilen Untersatz (57) zwischen den Überschreitungspositionen A der Leitung oder des Kabels und der Überschreitungsposition B der Klemme aufgebaut sind.

11. System gemäß Anspruch 10, **dadurch gekennzeichnet, daß** die zwei Klemmbacken Spannbacken (52) in Form von Kämmen umfassen, die mit Federnocken (53, 53') ausgestattet sind, die in der geschlossenen Position der Klemme ineinander eingreifen.

12. System gemäß Anspruch 1 bis 11, **dadurch gekennzeichnet, daß** eine Klemmenstütze durch einen Mechanismus in Form eines verformbaren Parallelogramms verschiebbar ist.

13. System gemäß Anspruch 1 bis 11, **dadurch gekennzeichnet, daß** eine Klemmenstütze ein Element in Form einer gebogenen Zahnstange (40, 41) umfaßt, die mittels eines Zahnrades (42) verschiebbar ist, das auf einer gemeinsamen Stütze (42) der Klemmen der Kabeleinzieheinheit aufgebaut ist.

14. System gemäß Anspruch 1 bis 13, **dadurch gekennzeichnet, daß** der Stützaufbau (8, 13) der Kabeleinzieheinheit (16) seitlich im Verhältnis zu einem Schienengleis verschiebbar ist, auf dem sich das Fahrzeug (4) in einer Position zum Verlegen der Leitungen oberhalb des anliegenden Gleises bewegt.

15. System gemäß Anspruch 1 bis 14, **dadurch gekennzeichnet, daß** die Kabeleinzieheinheit (16) in eine horizontale Abwickel- und Verlegeposition der Leitungen hinter den vertikalen Hindernissen plaziert werden kann.

## Claims

1. Unwinding and stringing system for lines such as in particular catenary lines supported by a fixed supporting structure, of the type comprising a line coil carrying device from which the lines to be strung are unwinded, and means for unwinding and stringing the lines onto the supporting structure, this latter being capable of comprising impediments opposing to unwinding and stringing, such as beams of rigid cross-supports, traverse girders or the like, **characterized in that** the coil carrying device is a unit (1) capable of being immobilized during unwinding and stringing, the unwinding and stringing means (5) are mounted onto a vehicle (4) able to move along the stringing path and comprising a line drawing unit (16) with two gripping devices for a line (3), a front one (17) and a rear one (18), mounted on a support at a predetermined distance one from the other in the axial direction of the line, each device being selectively movable between a high gripping position (A) of the line (3) and a low position (B) of retraction in front of an impediment, in which the line (3) is not maintained.

2. System according to claim 1, **characterized in that** each grip (41) is movable between a position above or behind an impediment (45), with respect to the vehicle (4) carrying the unwinding and stringing means and a position under or before the impediment.

3. System according to one of claims 1 or 2, **characterized in that** the line or cable unwinding and stringing means comprise a supporting assembly of the line drawing unit (16), which is mounted onto the vehicle (4) rotating around a spindle perpendicular to the floor of the vehicle and pivoting around a spindle (11) in a plane perpendicular to the rotation spindle, and the length of which is variable.

4. System according to claim 3, **characterized in that** the supporting assembly comprises a mast (8), rotatively mounted around the prementioned rotation spindle and pivoting around the prementioned pivoting spindle (11), **in that** a arm (13) for supporting the line drawing unit (16) is mounted onto the upper end of the mast (8), through means (12) of orientation in the horizontal and vertical plane, and **in that** the line drawing unit (16) is mounted onto the arm (13) through means of orientation, in case, in the horizontal and vertical plane.

5. System according to claim 4, **characterized in that** the prementioned arm (13) is mounted onto the mast (8) by means of an intermediate turret (12).

6. System according to one of claims 4 or 5, **characterized in that** the mast (8) is made in the form of a parallelogram (27, 28), which is deformable by a control means such as a cylinder (39).

7. System according to one of claims 4 to 6, **characterized in that** the arm (13) is made in the form of an articulated arm (14, 15) provided with means for varying the angle formed by the arms.

8. System according to one of claims 4 to 6, **characterized in that** the arm (13) is made in the shape of a parallelogram (69, 70), which is deformable by a control means such as a cylinder.

9. System according to one of claims 3 to 8, **characterized in that** the supporting assembly is provided with means (20, 21) for correcting inclination of the vehicle (4) due to slanting.

10. System according to one of claims 1 to 9, **characterized in that** a grip (41) comprises two gripping jaws (47, 47') which are pivotally mounted, between grip closing and opening positions, on a support (57) which is movable between passing positions A for the line or cable and passing position B for the grip.

11. System according to claim 10, **characterized in that** the two gripping jaws comprise comb shaped gripping cheeks (52), fitted with spring cams (53, 53') mutually inbricated in the grip closing position.

12. System according to one of claims 1 to 11, **characterized in that** a support for the grip is movable by means of a deformable parallelogram shaped mechanism.

13. System according to one of claims 1 to 11, **characterized in that** a support for the grip comprises an arcuate rack shaped element (40, 41) movable by means of a pinion (42), which is mounted onto a common support (42) of the grips of the line drawing unit.

14. System according to one of claims 1 to 13, **characterized in that** the support assembly (8, 13) of the a line drawing unit (16) is laterally movable with respect to a running track on which the vehicle (4) is moved in a line stringing position above the adjacent track.

15. System according to one of claims 1 to 14, **characterized in that** the line drawing unit (16) may be positioned in a horizontal position for unwinding and stringing the lines behind vertical impediments.
